# EUROPÄISCHE PATENTANMELDUNG

(11) **EP 3 012 699 A2**
(43) Veröffentlichungstag der Anmeldung: **27.04.2016**
(21) Anmeldenummer: 15190335.8
(22) Anmeldetag: 19.10.2015
(51) Int. Cl.: G05B 19/042

(54) **SENSOR-/AKTOR-SYSTEM UND VERFAHREN ZUM BETREIBEN EINES SENSOR-/AKTOR-SYSTEMS**

(30) Priorität: 20.10.2014 DE 102014115248
(71) Anmelder: BALLUFF GmbH, 73765 Neuhausen (DE)
(72) Erfinder: Eggimann, Marc, 2564 Bellmund (CH); Gutekunst, Jürgen, 72622 Nürtingen (DE); Beyer, Matthias, 70186 Stuttgart (DE)
(74) Vertreter: Hoeger, Stellrecht & Partner Patentanwälte mbB

(57) **Zusammenfassung**

Es wird ein Sensor-/Aktor-System bereitgestellt, umfassend
- mindestens eine Basisstation (12),
- mindestens eine Hubeinrichtung (18), an welcher eine Mehrzahl von Systemelementen (24) angeschlossen sind oder anschließbar sind, wobei ein Systemelement (24) ein Sensor oder ein Aktor ist, wobei die mindestens eine Hubeinrichtung (18) drahtlos mit der mindestens einen Basisstation (12) kommuniziert, und wobei über die mindestens eine Hubeinrichtung (18) Daten von der mindestens einen Basisstation (12) an Systemelemente (24) übertragbar sind und/oder Daten von Systemelementen (24) an die mindestens eine Basisstation (12) übertragbar sind, und
- mindestens eine Energieversorgungseinrichtung (36), welche der mindestens einen Hubeinrichtung (18) zugeordnet ist und diese mit elektrischer Energie versorgt, wobei die mindestens eine Hubeinrichtung (18) die Systemelemente (24) mit elektrischer Energie versorgt, und wobei eine Versorgungsspannung der mindestens einen Hubeinrichtung (18) kleiner oder gleich 10 V ist.

## Beschreibung

Die Erfindung betrifft ein Sensor-/Aktor-System.

Ferner betrifft die Erfindung ein Verfahren zum Betreiben eines Sensor-/Aktor-Systems.

Aus der US 2005/0265269 A1 ist ein Signalübertragungsapparat bekannt, an welchen mindestens ein Feldgerät verbunden ist und welcher Signale sendet, die von dem Feldgerät erhalten werden.

Aus der DE 10 2006 062 476 A1 ist ein Funkfeldgerät mit integrierter Energieversorgung bekannt, bestehend aus einer Sensoreinheit zur Erfassung einer chemisch/physikalischen Messgröße und einer Funkeinheit, die mit der Sensoreinheit verbunden ist und die ein erstes Funkmodul zur drahtlosen Kommunikation mit einer Zentraleinheit und einer Energieversorgungseinheit als integrierte Energieversorgung aufweist. Die Funkeinheit weist ein zweites Funkmodul auf, dass zur drahtlosen Kommunikation mit einer Bedieneinheit dient.

Aus der WO 2013/092246 A1 ist ein Feldgerät der Prozessautomatisierungstechnik mit einem Hauptschaltkreis, der in einem ersten Betriebsmodus zur Auswertung und zur Ausgabe von Prozessdaten dient, bekannt. Es sind eine erste und eine zweite Schnittstelle vorgesehen.

Aus der DE 10 2012 214 693 A1 ist ein elektronisches Slavegerät für ein Single-Master-Slave-System bekannt.

Aus der WO 2008/104260 A1 ist eine fluidtechnische Vorrichtung bekannt, welche mindestens einen elektrischen Leiter zur elektrischen Versorgung mindestens einer elektrischen Komponente der Vorrichtung mit elektrischer Energie aufweist.

Aus der DE 10 2008 043 199 A1 ist ein autarkes Feldgerät der Automatisierungstechnik bekannt.

Aus der DE 10 2007 034 794 B4 ist ein Verfahren zur Inbetriebnahme und zum Betrieb eines Funksystems bekannt.

Aus der DE 10 2007 062 338 A1 ist ein Sensorsystem zur Bestimmung von physikalischen Größen an bewegten Teilen einer Rotationsdruckmaschine bekannt.

Ein Sensor-/Aktor-System weist üblicherweise eine Mehrzahl von Sensoren bzw. Aktoren auf. Sensoren stellen Daten bereit, Aktoren werden Befehle bereitgestellt.

Der Erfindung liegt die Aufgabe zugrunde, ein Sensor-/Aktor-System zu realisieren, bei welchem der Energieverbrauch reduziert ist.

Diese Aufgabe wird erfindungsgemäß dadurch gelöst, dass mindestens eine Basisstation vorgesehen ist, mindestens eine Hubeinrichtung vorgesehen ist, an welcher eine Mehrzahl von Systemelementen angeschlossen sind oder anschließbar sind, wobei ein Systemelement ein Sensor oder ein Aktor ist, wobei die mindestens eine Hubeinrichtung drahtlos mit der mindestens einen Basisstation kommuniziert, und wobei über die mindestens eine Hubeinrichtung Daten von der mindestens einen Basisstation an Systemelemente übertragbar sind und/oder Daten von Systemelementen an die mindestens eine Basisstation übertragbar sind, und mindestens eine Energieversorgungseinrichtung vorgesehen ist, welche der mindestens einen Hubeinrichtung zugeordnet ist und diese mit elektrischer Energie versorgt, wobei die mindestens eine Hubeinrichtung die Systemelemente mit elektrischer Energie versorgt, und wobei eine Versorgungsspannung der mindestens einen Hubeinrichtung kleiner oder gleich 10 V ist.

Die Hubeinrichtung sorgt für die Ansteuerung von Aktoren bzw. stellt Sensordaten der Basisstation bereit. Über die Hubeinrichtung erfolgt auch die Energieversorgung von Systemelementen.

Wenn die Systemelemente eine geringe Leistung aufweisen, und die Versorgungsspannung der mindestens einen Hubeinrichtung genügend klein ist, dann lässt sich ein energieautarkes System bereitstellen, wobei insbesondere ein energieautarker Betrieb über die Lebensdauer (wie beispielsweise zehn Jahre) des Systems ermöglicht ist.

Es lässt sich ein kabelloser Betrieb realisieren. Durch die drahtlose Verbindung zwischen der Basisstation und der mindestens einen Hubeinrichtung müssen keine entsprechenden Kabel gelegt werden. Außerdem werden bei Kabellösungen vorhandene Probleme wie Kabelbruch und dergleichen vermieden.

An typischen Einbaupositionen von Systemelementen (Sensoren und/oder Aktoren) fehlt es häufig an Platz. So kann es schwierig sein, ein Systemelement mit einer Batterie oder einem Energieernter auszustatten. Oft ist auch eine Funkverbindung von einem Systemelement zu einer Basisstation nicht direkt möglich, wenn das Systemelement beispielsweise von allen Seiten mit einem metallischen Material umgeben ist. Weiterhin kann oft das Problem auftauchen, dass die Position bei einem Systemelement nicht die ideale Position für eine Batterie oder einen Energieernter ist.

Bei der erfindungsgemäßen Lösung sind die Systemelemente und die Hubeinrichtung räumlich getrennt. Durch diese räumliche Trennung können die beschriebenen Nachteile vermieden werden. Beispielsweise kann die Hubeinrichtung auf einer entsprechenden großen und ebenen Fläche positioniert werden. Dort kann beispielsweise eine Solarzelleneinrichtung integriert werden. Die Hubeinrichtung kann auf einer gut beleuchteten Stelle einer Anwendung (wie einer Werkzeugmaschine) positioniert werden. Die Voraussetzungen für die Positionierung und einer Montage gelten dann nicht mehr für die Systemelemente. Die Systemelemente benötigen dann keine Zusatzelemente (wie Batterien, Energieernter usw.). Der Platzbedarf für Systemelemente ist minimiert. Des Weiteren ist die Verbindung verbessert, da sich die Hubeinrichtung für eine drahtlose Kommunikation optimiert positionieren lässt, wobei dann diese Positionierung keine Einschränkungen für die Positionierung der Systemelemente darstellt.

Es ist dann insbesondere günstig, wenn eine Versorgungsspannung der mindestens einen Hubeinrichtung kleiner oder gleich 5 V ist und insbesondere im Bereich zwischen 3 V und 5 V liegt.

Ganz besonders vorteilhaft ist es, wenn eine Versorgungsspannung eines Systemelements kleiner oder gleich 10 V ist und insbesondere kleiner oder gleich 5 V ist und insbesondere im Bereich zwischen 3 V und 5 V liegt.

Es ist insbesondere günstig, wenn eine Leistungsaufnahme eines Systemelements im Vergleich zu konventionellen Systemelementen stark erniedrigt ist und insbesondere im Betrieb kleiner 500 µW und insbesondere kleiner als 300 µW und insbesondere kleiner als 200 µW und insbesondere kleiner als 100 µW und insbesondere kleiner als 50 µW ist. Dadurch lässt sich ein energieautarker Betrieb realisieren.

Bei einer Ausführungsform umfasst die mindestens eine Energieversorgungseinrichtung mindestens eine Primärzelle (nicht wiederaufladbare Batterie) und/oder mindestens eine Sekundärzelle (wiederaufladbare Batterie) und/oder mindestens eine induktive Bereitstellungseinrichtung. Bei niedriger Leistungsaufnahme der Hubeinrichtung und der Systemelemente lässt sich insbesondere über die Lebensdauer ein energieautarker Betrieb realisieren.

Es ist dann günstig, wenn die mindestens eine Hubeinrichtung mit zugeordneter Energieversorgungseinrichtung und den zugeordneten Systemelementen energieautark ausgebildet ist.

Bei einem Ausführungsbeispiel umfasst die Energieversorgungseinrichtung mindestens einen Energieernter (Energie-Harvester), welcher elektrische Energie bereitstellt, welche aus der Umgebung der mindestens einen Hubeinrichtung gewonnen wurde. Dadurch lässt sich ein energieautarker Betrieb realisieren bzw. verbessern.

Beispielsweise umfasst der mindestens eine Energieernter mindestens eine Solarzelle und/oder mindestens einen thermoelektrischen Generator und/oder mindestens einen Vibrationswandler. Über eine Solarzelle kann beispielsweise aus solarer Einstrahlung elektrische Energie gewonnen werden. Über einen thermoelektrischen Generator kann beispielsweise aus einer Temperaturdifferenz zwischen einer Wärmesenke und einer Wärmequelle elektrische Energie gewonnen werden. Über einen Vibrationswandler kann aus mechanischer Energie elektrische Energie gewonnen werden.

Es ist dabei möglich, dass der mindestens eine Energieernter direkt an die mindestens eine Hubeinrichtung gekoppelt ist oder an mindestens eine Sekundärzelle (wiederaufladbare Batterie) der mindestens einen Energieversorgungseinrichtung gekoppelt ist. Beispielsweise lässt sich über einen Energieernter eine wiederaufladbare Batterie aufladen.

Es ist günstig, wenn Systemelemente über Leitungen an die mindestens eine Hubeinrichtung angeschlossen sind. Die Leitungen sind insbesondere bezüglich der Datenübertragung energiesparend ausgebildet. Beispielsweise erfolgt eine modulierte Datenübertragung oder es erfolgt eine optische Datenübertragung über entsprechende Glasfaserleitungen.

Es ist günstig, wenn die mindestens eine Hubeinrichtung Daten von einer Mehrzahl von Systemelementen als Datentelegramm von der Basisstation empfängt und/oder Daten von einer Mehrzahl von Systemelementen an die Basisstation als Datentelegramm sendet. Die Datenübertragung kann auch differentiell sein (wie beispielsweise bei der Ethernet-Datenübertragung). Dadurch wird die Datenübertragung vereinfacht.

Ein Datenaustausch zwischen der mindestens einen Basisstation und der mindestens einen Hubeinrichtung kann unidirektional oder bidirektional sein. Wenn beispielsweise Aktoren angesteuert werden sollen, dann reicht es grundsätzlich aus, wenn die Basisstation nur Befehle an die Hubeinrichtung übermittelt, das heißt die Kommunikation unidirektional ist. Eine bidirektionale Kommunikation kann dann sinnvoll sein, wenn beispielsweise Zustandsdaten von Aktoren übermittelt werden sollen. Wenn beispielsweise die Systemelemente Sensoren sind, dann genügt es grundsätzlich, wenn Sensordaten unidirektional an die Basisstation übertragen werden. Es kann hier auch eine bidirektionale Datenkommunikation sinnvoll sein, wenn beispielsweise Sensoren parametriert werden sollen. Wenn die Systemelemente sowohl Sensoren als auch Aktoren umfassen, ist eine bidirektionale Kommunikation zwischen der mindestens einen Basisstation und der mindestens einen Hubeinrichtung notwendig.

Bei einer IO-Link-Wireless-Kommunikation erfolgt der Datenaustausch bidirektional. Bei bidirektionalen Verbindungen besteht die Möglichkeit einer Übertragung einer Bestätigung (Acknowledge). Dadurch kann beispielsweise festgestellt werden, ob eine Kommunikation gestört oder unterbrochen ist.

Insbesondere erfolgt ein Datenaustausch zwischen der mindestens einen Basisstation und der mindestens einen Hubeinrichtung über ein IO-Link-Wireless-Protokoll. Dieses Protokoll ist festgelegt. (IO-Link ist eine eingetragene Marke der PROFIBUS-Nutzerorganisation e.V., Karlsruhe.) Das IO-Link-Protokoll ist echtzeitfähig. Es ist ferner deterministisch, d. h. das Antwortverhalten ist absehbar und das Übertragungsverhalten unterliegt einer genauen Kontrolle. Insbesondere sind Latenzzeiten klar definierbar. Das Protokoll erreicht insbesondere Zykluszeiten im Bereich zwischen 1 ms und 10 ms. Es ergibt sich dadurch ein breites Einsatzspektrum in der Industrieautomation.

Ein Datenaustausch zwischen der mindestens einen Hubeinrichtung und den Systemelementen kann unidirektional oder bidirektional sein. Grundsätzlich reicht eine unidirektionale Datenkommunikation aus, wenn beispielsweise Sensordaten an die Hubeinrichtung weitergeleitet werden oder die Hubeinrichtung Befehlsdaten an Aktoren übermittelt. Wenn beispielsweise Sensoren parametriert werden sollen, dann ist ein bidirektionaler Datenaustausch notwendig. Wenn Aktoren beispielsweise überwacht werden sollen, dann ist ebenfalls ein bidirektionaler Datenaustausch notwendig.

Bei einem Ausführungsbeispiel ist die mindestens eine Basisstation an einen Feldbus angeschlossen. Dadurch lässt sich ein optimiertes System realisieren.

Die eingangs genannte Aufgabe wird ferner erfindungsgemäß dadurch gelöst, dass mindestens eine Basisstation und eine Mehrzahl von Systemelementen vorgesehen sind, wobei ein Systemelement ein Sensor oder Aktor ist, wobei ein Systemelement drahtlos mit der mindestens einen Basisstation kommuniziert und wobei einem Systemelement eine autarke Energieversorgungseinrichtung zugeordnet ist.

Wenn ein Systemelement mit entsprechend geringer Leistungsaufnahme ausgebildet ist, dann lässt sich dadurch ein Sensor-/Aktor-System realisieren, welches sich bei minimierten Installationsaufwand und insbesondere minimiertem Verkabelungsaufwand energieautark betreiben lässt. Dadurch ergeben sich umfangreiche Einsatzmöglichkeiten.

Die Systemelemente ("Endelemente") kommunizieren direkt drahtlos mit der Basisstation. Die Systemelemente weisen dann eine entsprechende eigene Energieversorgung auf.

Insbesondere ist eine Versorgungsspannung eines Systemelements kleiner oder gleich 10 V und ist insbesondere kleiner oder gleich 5 V und liegt insbesondere im Bereich zwischen 3 V und 5 V.

Für eine energieautarke Ausbildung ist es vorteilhaft, wenn eine Leistungsaufnahme eines Systemelements im Betrieb kleiner als 500 µW und insbesondere kleiner als 300 µW und insbesondere kleiner als 200 µW und insbesondere kleiner als 100 µW und insbesondere kleiner als 50 µW ist.

Günstig ist es, wenn die mindestens eine Energieversorgungseinrichtung mindestens eine Primärzelle (nicht wiederaufladbare Batterie) und/oder mindestens eine Sekundärzelle (wiederaufladbare Batterie) umfasst und/oder mindestens eine induktive Energiebereitstellungseinrichtung umfasst. Dadurch lässt sich auf einfache Weise ein energieautarkes System mit minimiertem Verkabelungsaufwand realisieren.

Ganz besonders vorteilhaft ist es, wenn ein Sensorelement mit zugeordneter Energieversorgungseinrichtung energieautark ausgebildet ist. Insbesondere lässt sich über eine Lebensdauer des Systems eine energieautarke Ausbildung realisieren.

Es ist dann günstig, wenn die mindestens eine Energieversorgungseinrichtung mindestens einen Energieernter (Energie-Harvester) umfasst, welcher elektrische Energie bereitstellt, welche aus der Umgebung der mindestens einen Hubeinrichtung gewonnen wurde. Dadurch lässt sich ein energieautarkes System ausbilden.

Beispielsweise umfasst der mindestens eine Energieernter mindestens eine Solarzelle und/oder mindestens einen thermoelektrischen Generator und/oder mindestens einen Vibrationswandler.

Es kann dabei vorgesehen sein, dass der mindestens eine Energieernter direkt an mindestens ein Systemelement gekoppelt ist oder an mindestens eine Sekundärzelle (wiederaufladbare Batterie) der mindestens einen Energieversorgungseinrichtung gekoppelt ist.

Ein Datenaustausch zwischen der mindestens einen Basisstation und einem Sensorelement kann unidirektional oder bidirektional sein.

Insbesondere erfolgt ein Datenaustausch zwischen der mindestens einen Basisstation und einem Sensorelement über ein IO-Link-Wireless-Protokoll.

Es ist günstig, wenn die mindestens eine Basisstation an einen Feldbus angeschlossen ist.

Erfindungsgemäß wird ein Verfahren bereitgestellt, bei dem eine Basisstation drahtlos mit einer Hubeinrichtung kommuniziert, die Hubeinrichtung Systemelemente, welche Sensoren und/oder Aktoren sind, mit elektrischer Energie versorgt und über die Hubeinrichtung Daten den Systemelementen bereitgestellt werden und/oder von Systemelementen bereitgestellte Daten an die Basisstation übertragen werden, und bei dem die Hubeinrichtung und dadurch die Systemelemente autark mit elektrischer Energie versorgt werden.

Ferner wird erfindungsgemäß ein Verfahren zum Betreiben eines Sensor-/Aktor-Systems bereitgestellt, bei dem eine Basisstation drahtlos mit einer Mehrzahl von Systemelementen kommuniziert, wobei die Systemelemente Sensoren und/oder Aktoren sind, und bei dem die Systemelemente autark mit elektrischer Energie versorgt werden.

Die erfindungsgemäßen Verfahren weisen die bereits im Zusammenhang mit den erfindungsgemäßen Systemen erläuterten Vorteile auf.

Vorteilhafte Ausgestaltungen der erfindungsgemäßen Verfahren wurden ebenfalls bereits im Zusammenhang mit den erfindungsgemäßen Systemen erläutert.

Die nachfolgende Beschreibung bevorzugter Ausführungsformen dient im Zusammenhang mit den Zeichnungen der näheren Erläuterung der Erfindung. Es zeigen:
- Figur 1: eine schematische Darstellung eines ersten Ausführungsbeispiels eines erfindungsgemäßen Sensor-/Aktor-Systems;
- Figur 2: eine schematische Darstellung eines zweiten Ausführungsbeispiels eines erfindungsgemäßen Sensor-/Aktor-Systems;
- Figur 3: eine schematische Darstellung eines dritten Ausführungsbeispiels eines erfindungsgemäßen Sensor-/Aktor-Systems; und
- Figur 4: eine schematische Darstellung eines vierten Ausführungsbeispiels eines erfindungsgemäßen Sensor-/Aktor-Systems.

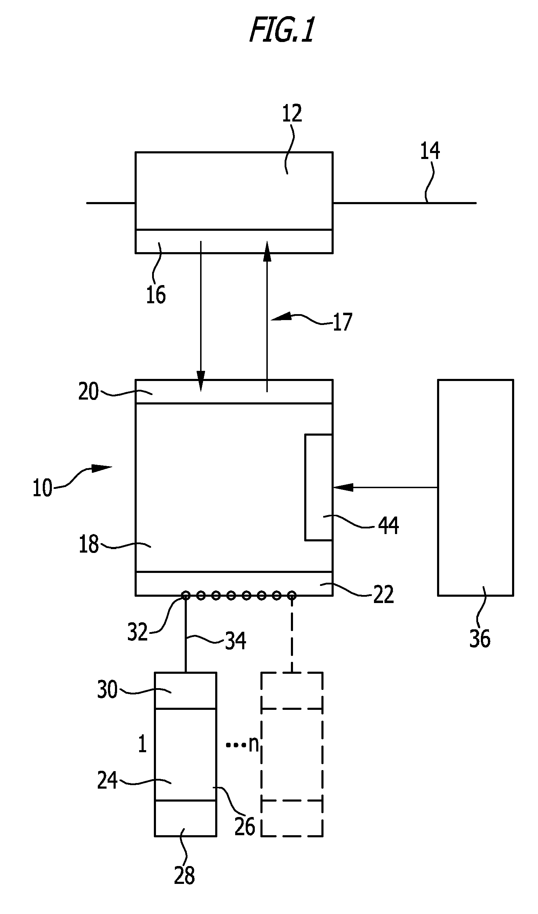

Ein erstes Ausführungsbeispiel eines erfindungsgemäßen Sensor-/Aktor-Systems, welches in Figur 1 schematisch gezeigt und dort mit 10 bezeichnet ist, umfasst eine Basisstation 12. Die Basisstation 12 ist beispielsweise an einen Feldbus 14 gekoppelt.

Die Basisstation 12 umfasst eine Kommunikationseinrichtung 16, über welche Daten übertragen werden können. Je nach Ausbildung des Sensor-/Aktor-Systems 10 können über die Kommunikationseinrichtung 16 Befehle gesendet werden, Daten empfangen werden oder sowohl Befehle gesendet werden als auch Daten empfangen werden. Im letzteren Fall ist die Datenkommunikation bidirektional. (Beispielsweise ist ein IO-Link-Wireless-System bidirektional.) In den beiden zuvor erwähnten Fällen ist die Datenkommunikation unidirektional.

Die Datenkommunikation der Basisstation 12 erfolgt drahtlos (in Figur 1 mit dem Bezugszeichen 17 angedeutet). Insbesondere erfolgt sie über ein IO-Link-Wireless-Protokoll. (IO-Link ist eine eingetragene Marke der PROFIBUS-Nutzerorganisation e.V., Karlsruhe.)

Das Sensor-/Aktor-System 10 umfasst ferner (mindestens) eine Hubeinrichtung 18. Sie weist eine Kommunikationsschnittstelle 20 für die Kommunikation mit der Basisstation 12 auf.

Sie weist ferner eine Kommunikationsschnittstelle 22 zur Kommunikation mit Systemelementen 24 auf. Die Systemelemente sind dabei Sensoren und/oder Aktoren.

Ein Sensor 26 weist eine Detektoreinrichtung 28 auf, welche Einflüsse der Umgebung detektiert und ein entsprechendes elektrisches Signal bereitstellt. Über eine Kommunikationsschnittstelle 30 wird dieses elektrische Signal der Kommunikationsschnittstelle 22 der Hubeinrichtung 18 bereitgestellt. Über die Kommunikationsschnittstelle 20 kann dann wiederum die Hubeinrichtung 18 solche Signale der Basisstation 12 zur Verfügung stellen.

Ein Sensor 26 weist insbesondere einen binären Schaltausgang auf. Ferner ist ein Sensor 26 vorzugsweise als Dreileiter-Sensor ausgebildet (mit positiver Versorgung, Masseanschluss und Schaltausgang).

Ein Aktor weist entsprechend eine Aktuatoreinrichtung auf, durch welche eine Aktion betätigbar ist. Ferner ist entsprechend eine Kommunikationsschnittstelle vorgesehen, über welche Befehle von der Kommunikationsschnittstelle 22 der Hubeinrichtung 18 empfangbar sind. Der Kommunikationsschnittstelle 20 der Hubeinrichtung 18 werden wiederum Befehle durch die Basisstation 12 bereitgestellt.

An die Hubeinrichtung 18 sind eine Mehrzahl von Systemelementen 24 angeschlossen bzw. anschließbar. In Figur 1 ist dies durch die Nummerierung "1 ... n" angezeigt. Dazu weist die Hubeinrichtung 18 an der Kommunikationsschnittstelle 22 entsprechende Anschlüsse 32 auf. Die Zahl der Anschlüsse 32 entspricht der Anzahl von Systemelementen n, die maximal anschließbar sind. Insbesondere erfolgt ein Anschluss eines Systemelements 24 an die Hubeinrichtung 18 über eine Leitungsverbindung 34.

Wenn die Systemelemente 24 Daten bereitstellen, dann sammelt insbesondere die Hubeinrichtung 18 solche Daten und überträgt diese Daten über die Kommunikationsschnittstelle 22 als Datentelegramm an die übergeordnete Feldebene, nämlich die Basisstation 12.

Es ist ferner insbesondere vorgesehen, wenn Systemelemente 24 Aktoren sind, dass ein Befehlssatz als Datentelegramm von der Basisstation 12 an die Hubeinrichtung 18 übertragen wird und die Hubeinrichtung 18 teilt dann die Befehle auf die einzelnen Systemelemente 24 auf.

Bei einer Ausführungsform ist das Sensor-/Aktor-System ein reines Sensorsystem und alle Systemelemente 24 sind Sensoren. Daten der Sensoren 24 werden dann der Hubeinrichtung 18 bereitgestellt und von dort insbesondere gesammelt an die Basisstation 12 übertragen. In diesem Falle ist die Kommunikation zwischen den Systemelementen 24 und der Hubeinrichtung 18 unidirektional. Ferner ist die Kommunikation zwischen der Hubeinrichtung 18 und der Basisstation 12 unidirektional. Es kann aber auch eine bidirektionale Datenkommunikation sowohl zwischen der Basisstation 12 und der Hubeinrichtung 18 als auch zwischen der Hubeinrichtung 18 und Systemelementen 24 vorgesehen werden, um beispielsweise Sensorparameter variieren zu können.

Wenn alle Systemelemente 24 Aktoren sind, dann empfangen diese Befehle von der Hubeinrichtung 18, wobei diese Befehle wiederum von der Basisstation 12 drahtlos an die Hubeinrichtung 18 übertragen werden. In diesem Falle ist insbesondere die Datenbereitstellung von der Basisstation 12 zu der Hubeinrichtung 18 unidirektional und von der Hubeinrichtung 18 zu den entsprechenden Systemelementen 24 unidirektional.

Es kann auch eine bidirektionale Datenkommunikation zwischen der Basisstation 12 und der Hubeinrichtung 18 und/oder zwischen der Hubeinrichtung 18 und den Systemelementen 24 vorgesehen sein, insbesondere wenn beispielsweise entsprechende Aktoren als Systemelemente 24 überwacht werden, beispielsweise bezüglich ihrer Funktionsfähigkeit.

Es kann auch vorgesehen sein, dass in dem Sensor-/Aktor-System 10 als Systemelemente 24 gemischt Sensoren und Aktoren vorhanden sind. Sensoren stellen der Hubeinrichtung 18 Daten bereit und Aktoren empfangen Daten von der Hubeinrichtung 18. In diesem Fall ist insbesondere eine bidirektionale Kommunikation zwischen der Basisstation 12 und der Hubeinrichtung 18 vorgesehen.

Die Kommunikation zwischen der Hubeinrichtung 18 und einzelnen Systemelementen 24 können dabei grundsätzlich unidirektional oder bidirektional sein. Bei einem gemischten System mit Sensoren und Aktoren als Systemelementen 24 muss die Kommunikationsschnittstelle 20 Daten empfangen können und Daten senden können.

Die Hubeinrichtung 18 stellt den Systemelementen 24 die zu ihrem Betrieb notwendige elektrische Energie bereit. Es wird dabei entsprechende elektrische Energie für die Kommunikationsschnittstelle 30 an die Detektoreinrichtung 28 (bei einem Sensor) bzw. für eine Aktivierungseinrichtung bei einem Aktor benötigt. Die Hubeinrichtung 18 benötigt zu ihrem Betrieb selber elektrische Energie.

Die elektrische Energie wird der Hubeinrichtung über eine Energieversorgungseinrichtung 36 bereitgestellt.

Die Systemelemente 24 sind so ausgebildet, dass sie energiearm betreibbar sind. Insbesondere liegt die Versorgungsspannung zum Betreiben der Systemelemente 24 bei 10 V oder weniger und insbesondere bei 5 V oder weniger. Insbesondere liegt sie im Bereich zwischen 3 V und 5 V.

Ferner liegt die Leistungsaufnahme der Systemelemente 24 im Bereich unterhalb 1 mW und beispielsweise ist diese kleiner als 500 µW und insbesondere kleiner als 300 µW und insbesondere kleiner als 200 µW und insbesondere kleiner als 100 µW.

Entsprechend stellt die Energieversorgungseinrichtung 26 Energie mit einer Versorgungsspannung von 10 V oder weniger und beispielsweise im Bereich zwischen 3 V und 5 V bereit.

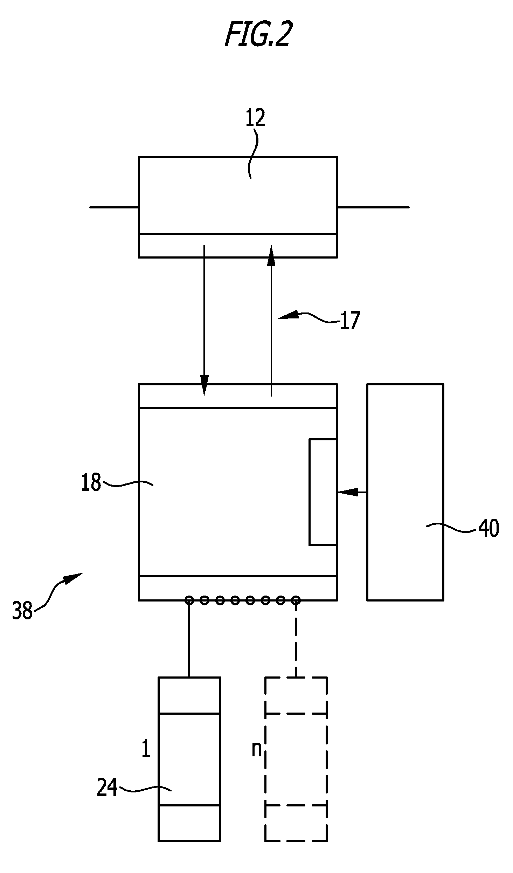

Bei einem zweiten Ausführungsbeispiel (Figur 2), welches in Figur 2 schematisch gezeigt und dort mit 38 bezeichnet ist, ist der Systemaufbau grundsätzlich gleich wie anhand von Figur 1 beschrieben.

Als Energieversorgungseinrichtung ist eine Batterie 40 vorgesehen, welche mindestens eine Primärzelle oder Sekundärzelle umfasst. Im letzteren Falle ist die Batterieeinrichtung aufladbar.

Bei entsprechender Ausbildung der Batterie 40 lässt sich das System 38 energieautark bezogen auf seine Lebensdauer betreiben.

Wenn beispielsweise die Batterie 40 eine Mehrzahl von Sekundärzellen umfasst mit einer Versorgungsspannung von 3,6 V, ein Ladungsspeichervermögen von 2,5 Ah aufweist und ein Energiespeichervermögen für elektrische Energie von 81 Wh aufweist, dann steht der Kombination über Hubeinrichtung 18 und Systemelementen 24 über eine Laufdauer von beispielsweise zehn Jahren von ca. 1 mW zur Verfügung.

Mit der Annahme, dass die Hubeinrichtung 18 ungefähr ein Drittel der entsprechenden Leistung benötigt, stehen den Systemelementen 24 über diese Laufzeit von zehn Jahren insgesamt 300 µW zur Verfügung. Dies teilt sich dabei auf mehrere Systemelemente 24 auf.

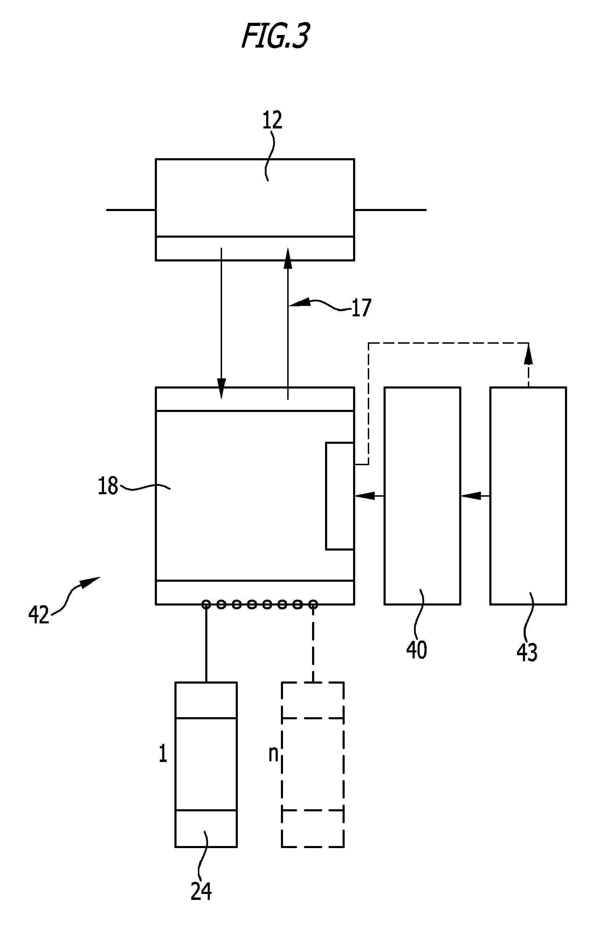

Bei einem weiteren Ausführungsbeispiel (Figur 3), welches in Figur 3 schematisch gezeigt und dort mit 42 bezeichnet ist, ist an die Batterie 40 mit einer Mehrzahl von Sekundärzellen ein Energieernter 43 (Energie-Harvester) angeschlossen. Dieser Energieernter 43 stellt elektrische Energie bereit, welche aus der Umgebung gewonnen wird. Der Energieernter 43 umfasst beispielsweise eine oder mehrere Solarzellen, wobei aus Solarenergie elektrischer Strom gewonnen wird.

Bei einem weiteren Ausführungsbeispiel ist der Energieernter ein thermoelektrischer Generator, welcher zwischen einer Wärmesenke und einer Wärmequelle thermoelektrisch elektrischen Strom gewinnt.

Es kann beispielsweise auch vorgesehen sein, dass der Energieernter 43 einen Vibrationswandler umfasst, welcher aus mechanischer Energie (insbesondere aus Vibrationen) elektrische Energie herstellt.

Über den Energieernter 43 wird elektrische Energie der Batterie 40 bereitgestellt und diese dabei geladen.

Es ist auch möglich, dass der Energieernter 43 der Hubeinrichtung 18 direkt elektrische Energie bereitstellt.

Die Hubeinrichtung 18 weist eine Energieschnittstelle 44 auf, von welcher aus bereitgestellte elektrische Energie (welche von der Energieversorgungseinrichtung 36 bereitgestellt ist) den Systemelementen 24 zur Verfügung gestellt wird.

Durch das Vorsehen eines Energieernters 43 lässt sich die Lebensdauer des Sensor-/Aktor-Systems 42 verlängern bzw. den Systemelementen 24 und der Hubeinrichtung 18 wird eine größere Leistung bereitgestellt.

Beispielsweise ist es möglich, wenn der Energieernter 43 eine Solarzelle umfasst, dass bei wenig Licht oder nachts elektrische Energie aus der Batterie 40 bereitgestellt wird. Wenn genügend Licht vorhanden ist, dann kann die Batterie 40 nachgeladen werden bzw. es kann eine Direktversorgung aus dem Energieernter 43 vorgesehen sein.

Bei den obigen Ausführungsbeispielen wurde beschrieben, dass die Hubeinrichtung 18 mit den Systemelementen 24 über eine Leitungsverbindung 34 verbunden ist. Es kann grundsätzlich auch vorgesehen sein, dass ein oder mehrere Systemelemente 24 über eine Funkverbindung mit der Hubeinrichtung 18 kommunizieren und/oder zusätzlich drahtlos mit der Basisstation 12 kommunizieren. Dies kann für bestimmte Anwendungen vorteilhaft sein.

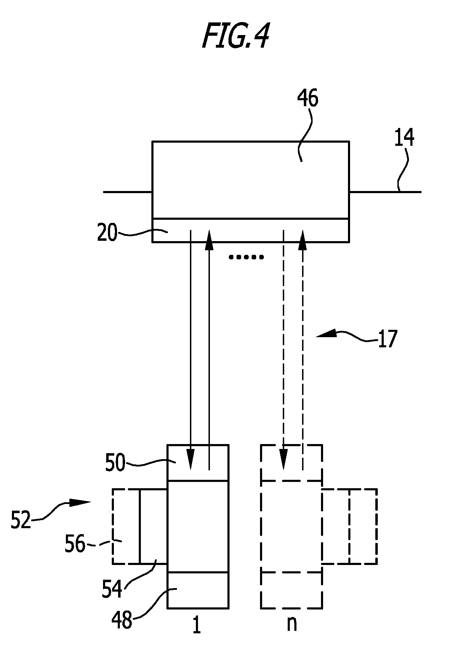

Bei einem vierten Ausführungsbeispiel, welches in Figur 4 schematisch gezeigt ist, ist eine Basisstation 46 vorgesehen, welche insbesondere an einen Feldbus 14 gekoppelt ist. Die Basisstation 46 ist grundsätzlich gleich ausgebildet wie die Basisstation 12 beschrieben.

Es sind eine Mehrzahl von Systemelementen 48 (Sensoren und/oder Aktoren) vorgesehen. Diese kommunizieren drahtlos (angedeutet mit dem Bezugszeichen 17) direkt mit der Basisstation 12. Dazu weist jedes Systemelement 48 eine entsprechende Kommunikationsschnittstelle 50 auf. Über diese erfolgt eine drahtlose unidirektionale oder bidirektionale Kommunikation mit der Basisstation 46. Die Kommunikation erfolgt insbesondere über ein IO-Link-Protokoll.

Die Systemelemente 48 sind insbesondere energieautark in dem entsprechenden System 52 angeordnet und ausgebildet. Die Systemelemente 48 weisen die obigen Anforderungen bezüglich der Leistungsaufnahme und der Versorgungsspannung auf, wie sie in dem Zusammenhang mit den Systemelementen 24 beschrieben worden sind. Einem oder einer Mehrzahl von Systemelementen ist eine Energieversorgungseinrichtung 54 zugeordnet, welche das zugeordnete oder die zugeordneten Systemelemente 48 mit elektrischer Energie versorgt.

Die Versorgungseinrichtung 54 ist insbesondere so ausgebildet, dass über die Lebensdauer des Systems 52 eine energieautarke Versorgung realisiert ist.

Die Energieversorgungseinrichtung 54 umfasst insbesondere eine oder mehrere Primärzellen oder Sekundärzellen. Die Energieversorgungseinrichtung 54 kann auch ein Energieernter 56 wie oben beschrieben zugeordnet sein. Es ist auch möglich, dass ein Energieernter 56 direkt an ein entsprechendes Systemelement gekoppelt ist.

Durch die erfindungsgemäße Lösung lässt sich ein Sensor-/Aktor-System mit minimiertem Verkabelungsaufwand realisieren. Ein solches System lässt sich beispielsweise in schwer zugänglichen Anlagen optimiert einsetzen. Auch wenn beispielsweise schnell bewegliche Sensorpositionen erfasst werden müssen, ist der Einsatz eines entsprechenden Systems vorteilhaft.

Die Probleme bei kabelgebundenen Systemen insbesondere bezüglich Kabelbruch und Lebensdauer sind vermieden.

Durch die Hubeinrichtung 18 können eine Mehrzahl von Systemelementen 24 betrieben werden und insbesondere energieautark betrieben werden.

Es ist insbesondere vorgesehen, dass die Leitungsverbindung 34 energiearm ist und beispielsweise über eine Glasfaser erfolgt und/oder eine Datenmodulation zur Minimierung des Energieaufwands für die Datenübertragung erfolgt.

### Bezugszeichenliste

- 10: Sensor-/Aktor-System (Erstes Ausführungsbeispiel)
- 12: Basisstation
- 14: Feldbus
- 16: Kommunikationseinrichtung
- 17: Drahtlose Kommunikation
- 18: Hubeinrichtung
- 20: Kommunikationsschnittstelle
- 22: Kommunikationsschnittstelle
- 24: Systemelement
- 26: Sensor
- 28: Detektoreinrichtung
- 30: Kommunikationsschnittstelle
- 32: Anschluss
- 34: Leitungsverbindung
- 36: Energieversorgungseinrichtung
- 38: Sensor-/Aktor-System (Zweites Ausführungsbeispiel)
- 40: Batterie
- 42: Sensor-/Aktor-System (Drittes Ausführungsbeispiel)
- 43: Energieernter
- 44: Energieschnittstelle
- 46: Basisstation
- 48: Systemelement
- 50: Kommunikationsschnittstelle
- 52: System
- 54: Energieversorgungseinrichtung
- 56: Energieernter

## Patentansprüche

1. Sensor-/Aktor-System, umfassend
- mindestens eine Basisstation (12),
- mindestens eine Hubeinrichtung (18), an welcher eine Mehrzahl von Systemelementen (24) angeschlossen sind oder anschließbar sind, wobei ein Systemelement (24) ein Sensor oder ein Aktor ist, wobei die mindestens eine Hubeinrichtung (18) drahtlos mit der mindestens einen Basisstation (12) kommuniziert, und wobei über die mindestens eine Hubeinrichtung (18) Daten von der mindestens einen Basisstation (12) an Systemelemente (24) übertragbar sind und/oder Daten von Systemelementen (24) an die mindestens eine Basisstation (12) übertragbar sind, und
- mindestens eine Energieversorgungseinrichtung (36), welche der mindestens einen Hubeinrichtung (18) zugeordnet ist und diese mit elektrischer Energie versorgt, wobei die mindestens eine Hubeinrichtung (18) die Systemelemente (24) mit elektrischer Energie versorgt, und wobei eine Versorgungsspannung der mindestens einen Hubeinrichtung (18) kleiner oder gleich 10 V ist.

2. Sensor-/Aktor-System nach Anspruch 1, **dadurch gekennzeichnet, dass** eine Versorgungsspannung der mindestens einen Hubeinrichtung (18) kleiner oder gleich 5 V ist und insbesondere im Bereich zwischen 3 V und 5 V liegt und/oderdass eine Versorgungsspannung eines Systemelements (24) kleiner oder gleich 10 V ist und insbesondere kleiner oder gleich 5 V ist und insbesondere im Bereich zwischen 3 V und 5 V liegt und/oder dass eine Leistungsaufnahme eines Systemelements (24) im Betrieb kleiner als 500 µW und insbesondere kleiner als 300 µW und insbesondere kleiner als 200 µW und insbesondere kleiner als 100 µW und insbesondere kleiner als 50 µW ist.

3. Sensor-/Aktor-System nach einem der vorangehenden Ansprüche, **dadurch gekennzeichnet, dass** die mindestens eine Energieversorgungseinrichtung (36) mindestens eine Primärzelle und/oder mindestens eine Sekundärzelle (40) umfasst und/oder mindestens eine induktive Energiebereitstellungseinrichtung umfasst.

4. Sensor-/Aktor-System nach einem der vorangehenden Ansprüche, **dadurch gekennzeichnet, dass** die mindestens eine Hubeinrichtung (18) mit zugeordneter Energieversorgungseinrichtung (36) energieautark ausgebildet ist.

5. Sensor-/Aktor-System nach einem der vorangehenden Ansprüche, **dadurch gekennzeichnet, dass** die mindestens eine Energieversorgungseinrichtung (36) mindestens einen Energieernter (42) umfasst, welcher elektrische Energie bereitstellt, welche aus der Umgebung der mindestens einen Hubeinrichtung (18) gewonnen wurde, und insbesondere, dass der mindestens eine Energieernter (42) mindestens eine Solarzelle und/oder mindestens einen thermoelektrischen Generator und/oder mindestens einen Vibrationswandler umfasst, und insbesondere, dass der mindestens eine Energieernter (42) direkt an die mindestens eine Hubeinrichtung (18) gekoppelt ist oder an mindestens eine Sekundärzelle (40) der mindestens einen Energieversorgungseinrichtung (36) gekoppelt ist.

6. Sensor-/Aktor-System nach einem der vorangehenden Ansprüche, **dadurch gekennzeichnet, dass** Systemelemente (24) über Leitungen an die mindestens eine Hubeinrichtung (18) angeschlossen sind.

7. Sensor-/Aktor-System nach einem der vorangehenden Ansprüche, **dadurch gekennzeichnet, dass** die mindestens eine Hubeinrichtung (18) Daten für eine Mehrzahl von Systemelementen (24) als Datentelegramm von der Basisstation (12) empfängt und/oder Daten von einer Mehrzahl von Systemelementen (24) an die Basisstation (12) als Datentelegramm sendet und/oder eine Datenübertragung differentiell ist.

8. Sensor-/Aktor-System nach einem der vorangehenden Ansprüche, **dadurch gekennzeichnet, dass** ein Datenaustausch zwischen der mindestens einen Basisstation (12) und der mindestens einen Hubeinrichtung (18) unidirektional oder bidirektional ist und/oder dass ein Datenaustausch zwischen der mindestens einen Basisstation (12) und der mindestens einen Hubeinrichtung (18) über ein IO-Link-Wireless-Protokoll erfolgt und/oderdass ein Datenaustausch zwischen der mindestens einen Hubeinrichtung (18) und den Systemelementen (24) unidirektional oder bidirektional ist.

9. Sensor-/Aktor-System nach einem der vorangehenden Ansprüche, **dadurch gekennzeichnet, dass** die mindestens eine Basisstation (12) an einen Feldbus (14) angeschlossen ist.

10. Sensor-/Aktor-System, umfassend mindestens eine Basisstation (46) und eine Mehrzahl von Systemelementen (48), wobei ein Systemelement (48) ein Sensor oder Aktor ist, wobei ein Systemelement (48) drahtlos mit der mindestens einen Basisstation (12) kommuniziert und wobei einem Systemelement (48) eine autarke Energieversorgungseinrichtung (54) zugeordnet ist.

11. Sensor-/Aktor-System nach Anspruch 10, **dadurch gekennzeichnet, dass** eine Versorgungsspannung eines Systemelements (48) kleiner oder gleich 10 V ist und insbesondere kleiner oder gleich 5 V ist und insbesondere im Bereich zwischen 3 V und 5 V liegt und/oder dass eine Leistungsaufnahme eines Systemelements (48) im Betrieb kleiner als 500 µW und insbesondere kleiner als 300 µW und insbesondere kleiner als 200 µW und insbesondere kleiner als 100 µW und insbesondere kleiner als 50 µW ist.

12. Sensor-/Aktor-System nach Anspruch 10 oder 11, **dadurch gekennzeichnet, dass** die mindestens eine Energieversorgungseinrichtung (54) mindestens eine Primärzelle und/oder mindestens eine Sekundärzelle umfasst und/oder mindestens eine induktive Energiebereitstellungseinrichtung umfasst.

13. Sensor-/Aktor-System nach einem der Ansprüche 10 bis 12, **dadurch gekennzeichnet, dass** ein Systemelement (48) mit zugeordneter Energieversorgungseinrichtung (54) energieautark ausgebildet ist.

14. Sensor-/Aktor-System nach einem der Ansprüche 10 bis 13, **dadurch gekennzeichnet, dass** die mindestens eine Energieversorgungseinrichtung (54) mindestens einen Energieernter umfasst, welcher elektrische Energie bereitstellt, welche aus der Umgebung der mindestens einen Hubeinrichtung gewonnen wurde, und insbesondere, dass der mindestens eine Energieernter mindestens eine Solarzelle und/oder mindestens einen thermoelektrischen Generator und/oder mindestens einen Vibrationswandler umfasst, und insbesondere, dass der mindestens eine Energieernter direkt an mindestens ein Systemelement (48) gekoppelt ist oder an mindestens eine Sekundärzelle der mindestens einen Energieversorgungseinrichtung (54) gekoppelt ist.

15. Sensor-/Aktor-System nach einem der Ansprüche 10 bis 14, **dadurch gekennzeichnet, dass** ein Datenaustausch zwischen der mindestens einen Basisstation (46) und einem Systemelement (48) unidirektional oder bidirektional ist und/oder dass ein Datenaustausch zwischen der mindestens einen Basisstation (46) und einem Systemelement (48) über ein IO-Link-Wireless-Protokoll erfolgt.

16. Sensor-/Aktor-System nach einem der Ansprüche 10 bis 15, **dadurch gekennzeichnet, dass** die mindestens eine Basisstation (46) an einen Feldbus angeschlossen ist.

17. Verfahren zum Betreiben eines Sensor-/Aktor-Systems, bei dem eine Basisstation (12) drahtlos mit einer Hubeinrichtung (18) kommuniziert, die Hubeinrichtung (18) Systemelemente (24), welche Sensoren und/oder Aktoren sind, mit elektrischer Energie versorgt und über die Hubeinrichtung (18) Daten den Systemelementen (24) bereitgestellt werden und/oder von Systemelementen (24) bereitgestellte Daten an die Basisstation (12) übertragen werden, und bei dem die Hubeinrichtung (18) und dadurch die Systemelemente (24) autark mit elektrischer Energie versorgt werden.

18. Verfahren zum Betreiben eines Sensor-/Aktor-Systems, bei dem eine Basisstation (46) drahtlos mit einer Mehrzahl von Systemelementen (48) kommuniziert, wobei die Systemelemente (48) Sensoren und/oder Aktoren sind, und bei dem die Systemelemente (48) autark mit elektrischer Energie versorgt werden.
